# EUROPEAN PATENT APPLICATION

(11) **EP 4 375 497 A1**
(43) Date of publication of application: **29.05.2024**
(21) Application number: 22315297.6
(22) Date of filing: 23.11.2022
(51) Int. Cl.: F02M 35/10, F16L 37/084

(54) **DUCT CONNECTION AND AIR DUCT**

(71) Applicant: MANN+HUMMEL GmbH, 71636 Ludwigsburg (DE)
(72) Inventor: FOULBOEUF, Gwenael, 52360 Entrammes (FR)
(74) Representative: Mann + Hummel Intellectual Property

(57) **Abstract**

The invention relates to a duct connection (100) between a first duct (10) having a receiving end part (11) with a first duct opening (17) and a second duct (20) having an insertable end part (21) with a second duct opening (27), comprising a sealing means (40) for sealing between the two ducts (10, 20) in an end position of the receiving and the insertable end parts (11, 21); a first connecting element (12) arranged at the insertable end part (11); a second connecting element (22) arranged at the receiving end part (21), wherein the first connecting element (12) and the second connecting element (12) are configured to cooperate as a swivel joint. The insertable end part (21) is movable into the receiving end part (11) by means of a swivel movement when the first and second connecting elements (12, 22) are in operating connection as a swivel joint.

## Description

### Technical Field

The invention relates to a duct connection between a first duct and a second duct and an air duct comprising at least a first duct and a second duct with a duct connection, in particular of an internal combustion engine, in particular of a motor vehicle or a stationary engine.

### Prior Art.

US 005655795 A discloses an inlet duct and seal assembly having the attachment of an intake air transfer duct to the throttle body of an internal combustion engine. The throttle body is provided with an inlet opening about which extends an annulus defining an outer annular wall. The inlet air duct has an opening which corresponds in diameter to that of the annular outer wall. A seal is disposed in the duct opening and includes an inwardly, radially directed wiper seal which is flexibly deformed between the annular wall and the duct opening when the duct opening is engaged over the throttle body inlet. A pivot clip extends from the inlet duct to engage a shelf on the throttle body to thereby position the duct opening with respect to the throttle body annulus to assure a proper seal and to simplify assembly of the components.

EP 2 816 273 A1 discloses a pipe joint comprising a first section of a first pipe and a second section of a second pipe, said second section comprising an end having an inner diameter approximately equal to the outer diameter of the first section. Said first section is inserted into the second section. When the two pipes are coupled to each other, said pipe joint comprises a pipe coupling for coupling the two pipe sections to each other. The pipe coupling comprises a hinge comprising a first part placed at one pipe and an attachment part placed at the other pipe, said pipe joint further comprising fastening means for fastening the two pipes to each other.

### Disclosure of the Invention

It is an object of the invention to provide a duct connection between a first duct and a second duct where a necessary assembling force is reduced.

Another object is to provide an air duct comprising at least a first duct and a second duct with a duct connection where a necessary assembling force is reduced.

According to an aspect of the invention the object is achieved by a duct connection between a first duct having a receiving end part with a first duct opening and a second duct having an insertable end part with a second duct opening, comprising a sealing means for sealing between the two ducts in an end position of the receiving and the insertable end parts; a first connecting element arranged at the insertable end part; a second connecting element arranged at the receiving end part, wherein the first connecting element and the second connecting element are configured to cooperate as a swivel joint, wherein the insertable end part is movable into the receiving end part by means of a swivel movement when the first and second connecting elements are in operating connection as a swivel joint.

According to another aspect of the invention the further object is achieved by an air duct comprising at least a first duct and a second duct with such a duct connection.

Advantageous embodiments are described in the dependent claims, the description and the drawings.

A duct connection is proposed between a first duct having a receiving end part with a first duct opening and a second duct having an insertable end part with a second duct opening, comprising a sealing means for sealing between the two ducts in an end position of the receiving and the insertable end parts; a first connecting element arranged at the insertable end part; a second connecting element arranged at the receiving end part, wherein the first connecting element and the second connecting element are configured to cooperate as a swivel joint. The insertable end part is movable into the receiving end part by means of a swivel movement when the first and second connecting elements are in operating connection as a swivel joint.

The invention deals with a duct connection between two ducts equipped with a sealing gasket and a specific device to reduce the assembling force. The ducts may be part of an air duct of an engine, in particular of an internal combustion engine, in particular of a motor vehicle or a stationary engine.

A standard duct connection with an O-ring or another seal to ensure a tightness requirement needs a compression rate typically of 30% or more of the seal which may be not compatible with a required assembling force, because an assembling force of more than 50 Newton may be needed.

A generic assembling force requested normally is 50 Newton maximum for assembling parts.

Although adding grease or lubricant may be an alternative for reducing the assembling force but this may not be suitable for some applications. If the parts are assembled after a long period of time, the lubricant may evaporate and then has no impact on the assembling force. Also, a lubricant has an impact on price of the duct parts or may contaminate the fluid which should be flowing in the duct.

Therefore an efficiency of using a sealing gasket plus a lubricant or a sealing gasket with a specific shape may not really be confirmed to reduce the assembling force.

The proposed duct connection uses two specific connection elements, each on one duct, which cooperate as a swivel joint in a swivel movement. Thus the assembling force is advantageously reduced by specific kinematics when joining the two ducts, without any components added.

According to a favorable embodiment of the duct connection, one of the connecting elements may be configured as a hook and the other one of the connecting elements may be configured as an opening. The hook and the opening may favorably cooperate in order to join the first duct and the second duct when bringing the two parts together and additionally may serve to fix the first duct and the second duct in an end position.

According to a favorable embodiment of the duct connection, the opening may be a through hole arranged in a wall of one the end parts, and the hook may be arranged at a wall of the other of the end parts. Thus the hook may be moved through the opening to outside of the ducts, which guarantees a free flow of fluids inside the ducts in an end position of the duct connection.

Favorably, the opening may be configured to receive the hook, when the second duct is inserted in an intended use into the opening by the swivel movement around the swivel axis perpendicular to an axial direction of the first duct.

According to a favorable embodiment of the duct connection, the hook may comprise a groove, wherein the groove is configured to engage with an edge of the opening when the insertable end part is inserted into the receiving end part, wherein the swivel axis is located in the groove. By this way the insertable end part may be inserted into the receiving end part by a swivel movement with a reduced assembling force.

According to a favorable embodiment of the duct connection, the hook arranged at one of the end parts may be pointing away from the duct opening arranged at the other of the end parts. In particular the groove may be arranged backwards in relation to a mounting direction. Thus the two ducts may be fixed in a stable connection when the duct connection is in an end position of assembly.

According to a favorable embodiment of the duct connection, the receiving end part may comprise a first segment adjacent to a second segment comprising the duct opening, the first segment having an inner diameter being smaller than an inner diameter of the second segment. This enables inserting the insertable end part into the receiving end part with a reduced assembling force wherein the sealing means are engaged with the first segment only in an end position of assembly of the duct connection.

According to a favorable embodiment of the duct connection, an inner surface of the first segment may be configured with a sealing surface for the sealing means when the insertable end part is inserted into the receiving end part. Thus the two ducts are tightly sealed when the insertable end part is in the end position of the duct connection in the first segment of the receiving end part.

According to a favorable embodiment of the duct connection, the opening may be located in the second segment of the receiving part. Thus the sealing of the duct connection is ensured in the end position of the duct connection because the sealing means of the insertable end part is placed in the first segment of the receiving part which does not exhibit any opening to the outside.

According to a favorable embodiment of the duct connection, an end stop may be provided for limiting an inserting depth for the second duct. In particular the end stop may be configured as a step in the receiving end part. By this way the inserted duct is fixed in both directions along the mounting axis of the two ducts, because in a reverse direction the duct connection is fixed by the cooperation of the hook and the edge of the opening and in a forward direction the inserted duct is stopped by the end stop in the receiving end part.

According to a favorable embodiment of the duct connection, the first duct and the second duct may be made of plastics material, in particular of a thermoplastics material. Plastics material is a frequently used material for air ducts as it is light material which may be manufactured in complex shapes by relatively cheap processes. The plastics material may be a thermoplastic material, e.g. polyamide or polypropylene, particularly filled with glass fibers and/or minerals.

According to a favorable embodiment of the duct connection, the sealing means may be a radial sealing means. In particular the sealing means may be arranged in a sealing groove at the outer wall of the insertable end part of the second duct. In particular said sealing means may comprise an annular gasket. The sealing area ensures radial tightness and increased leakage resistance in the region of the junction of the connected ducts. Such a connection is also easy to assemble and quickly detachable, and compatible with current flange designs for combustion engines, particular in the automotive industry.

Further, according to another aspect of the invention an air duct is proposed, comprising at least a first duct and a second duct with a duct connection.

The duct connection between the first duct having a receiving end part with a first duct opening and the second duct having an insertable end part with a second duct opening, comprises a sealing means for sealing between the two ducts in an end position of the receiving and the insertable end parts; a first connecting element arranged at the insertable end part; a second connecting element arranged at the receiving end part, wherein the first connecting element and the second connecting element are configured to cooperate as a swivel joint. The insertable end part is movable into the receiving end part by means of a swivel movement when the first and second connecting elements are in operating connection as a swivel joint.

The duct connection of the proposed air duct uses two specific connection elements, each on one duct, which cooperate as a swivel joint in a swivel movement. Thus the assembling force is advantageously reduced by specific kinematics when joining the two ducts, without any components added.

Advantageously the air duct may be used as a charge air duct, a clean side duct, a dirty side duct, an air cleaner and the like.

### Brief Description of the Drawings

The present invention together with the above-mentioned and other objects and advantages may best be understood from the following detailed description of the embodiments, but not restricted to the embodiments, wherein is shown in:
- Figure 1: a duct connection between a first duct and a second duct of an air duct according to an embodiment of the invention in an isometric view;
- Figure 2: the duct connection according to Figure 1 before joining the first duct and the second duct;
- Figure 3: in a cut view the duct connection according to Figure 1 in a first step of an assembly;
- Figure 4: in a cut view the duct connection according to Figure 1 in a second step of the assembly; and
- Figure 5: in a cut view the duct connection according to Figure 1 in a final position.

### Detailed Description of the Drawings

In the drawings, like elements are referred to with equal reference numerals. The drawings are merely schematic representations, not intended to portray specific parameters of the invention. Moreover, the drawings are intended to depict only typical embodiments of the invention and therefore should not be considered as limiting the scope of the invention.

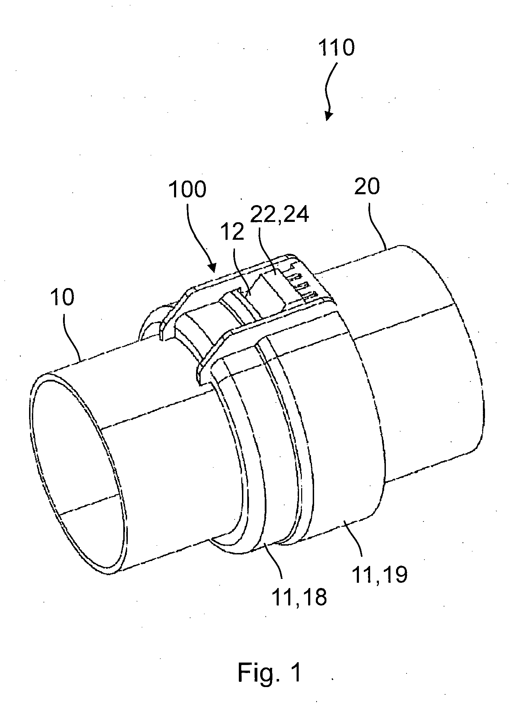

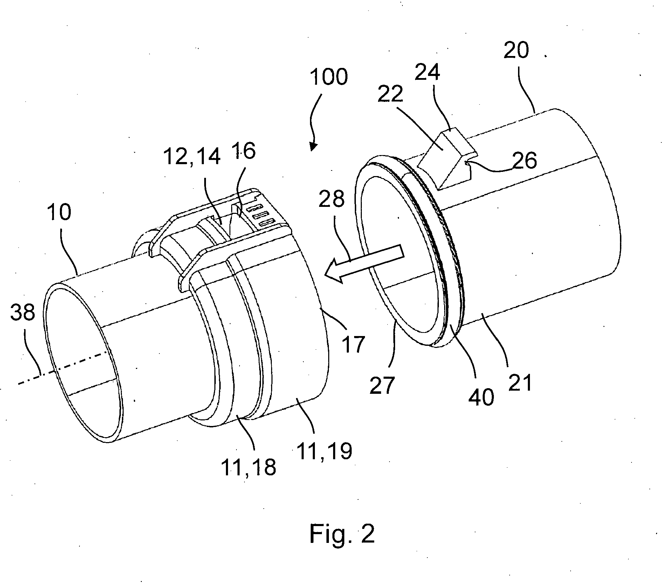

Figure 1 depicts a duct connection 100 between a first duct 10 and a second duct 20 of an air duct 110 according to an embodiment of the invention in an isometric view. In Figure 2 the duct connection 100 according to Figure 1 is depicted before joining the first duct 10 and the second duct 20.

The air duct 110 comprises at least the first duct 10 and the second duct 20 with the duct connection 100.

The first duct 10 has a receiving end part 11 with a first duct opening 17 and the second duct 20 has an insertable end part 21 with a second duct opening 27. Thus, for joining the two ducts 10, 20 the insertable end part 21 of the second duct 20 is inserted with the second duct opening 27 into the first duct opening 17 of the receiving end part 11 of the first duct 10.

The duct connection 100 comprises a sealing means 40 for sealing between the two ducts 10, 20 in an end position of the receiving and the insertable end parts 11, 21; a first connecting element 12 arranged at the insertable end part 11; and a second connecting element 22 arranged at the receiving end part 21. The first connecting element 12 and the second connecting element 12 are configured to cooperate as a swivel joint. Thus, the insertable end part 21 can be moved into the receiving end part 11 by means of a swivel movement when the first and second connecting elements 12, 22 are in operating connection as a swivel joint.

One of the connecting elements 12, 22 is configured as a hook 24 and the other one of the connecting elements 22, 12 is configured as an opening 14. The opening 14 is a through hole arranged in a wall of one the end parts 11, 21, and the hook 24 is arranged at a wall of the other of the end parts 21, 11. For the embodiment shown, the hook 24 as the connecting element 22 is part of the wall of the second end part 21 of the second duct 20, whereas the opening 14 as the connecting element 12 is a through hole arranged in the wall of the first end part 11 of the first duct 10.

The opening 14 is configured to receive the connecting element 22, when the second duct 20 is inserted in an intended use into the connecting element 12 of the first duct 10 by the swivel movement 48 around a swivel axis 36 perpendicular to an axial direction 38 of the first duct 10.

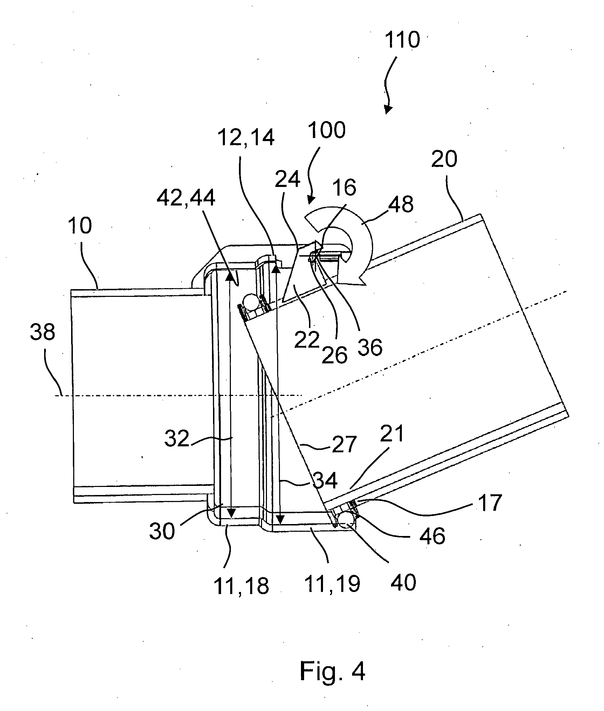

The hook 24 comprises a groove 26. The groove 26 is configured to engage with an edge 16 of the opening 14 when the insertable end part 21 is inserted into the receiving end part 11, wherein the swivel axis 36 is located in the groove 26, as is depicted in Figure 4.

The hook 24 is pointing away from the duct opening 17, 27, in particular the groove 26 is arranged backwards in relation to a mounting direction 28.

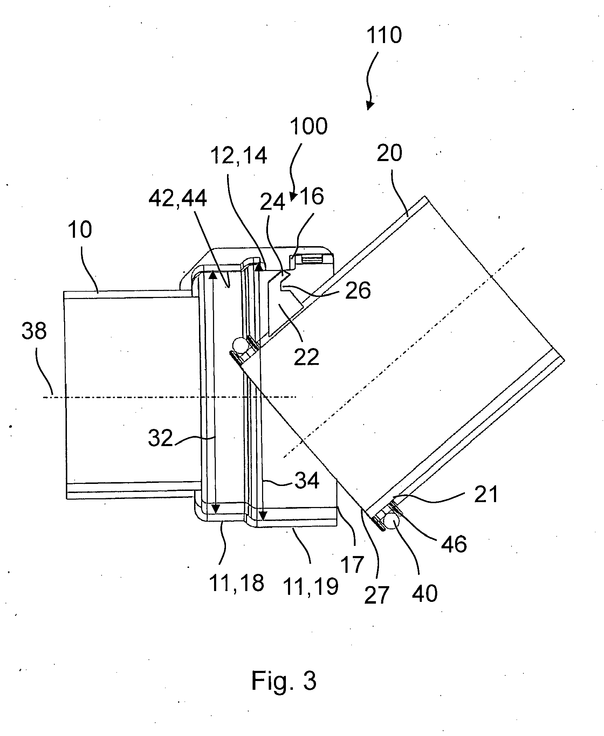

The receiving end part 11 comprises a first segment 18 adjacent to a second segment 19 comprising the duct opening 17. As is to be seen in Figure 3, the first segment 18 has an inner diameter 32 which is smaller than an inner diameter 34 of the second segment 19. This enables to insert the second end part 21 in a favorable manner into the first end part 11. The opening 14 is located in the second segment 19 of the receiving part 11.

The first duct 10 and the second duct 20 may favorably made of plastics material, in ' particular of a thermoplastics material.

The sealing means 40 is a radial sealing means. In particular is the sealing means 40 arranged in a sealing groove 46 at the outer wall of the insertable end part 21 of the second duct 20. Favorably, the sealing means 40 comprises an annular gasket.

Figure 3 depicts, in a cut view, the duct connection 100 in a first step of an assembly of the air duct 110.

The insertable end part 21 of the second duct 20 is tilted and inserted into the first duct opening 17, such that the hook 24 as the connecting element 22 of the second duct 20 is placed inside the first receiving end part 11 under the opening 14 as the other connecting element 12.

Next, as is depicted in Figure 4, where the duct connection 100 is shown in a second step of the assembly, the hook 24 is moved through the opening 14 so that the groove 26 of the hook 24 will be engaged with the edge 16 of the window 14. Thus a swivel axis 36 is established at the connection line of the groove 26 with the edge 16. When the insertable end part 21 is now tilted into a position in line with the axial direction 38 of the first duct 10 by a swivel movement, the contact between the groove 26 and the edge 16 may favorably absorb at least part of an insertion force during the swivel movement. The swivel movement is symbolized by an arrow 48.

Here the larger inner diameter 34 of the second segment 19 of the receiving end part 11 advantageously enables to reduce a compression of the sealing means 40 during the assembly.

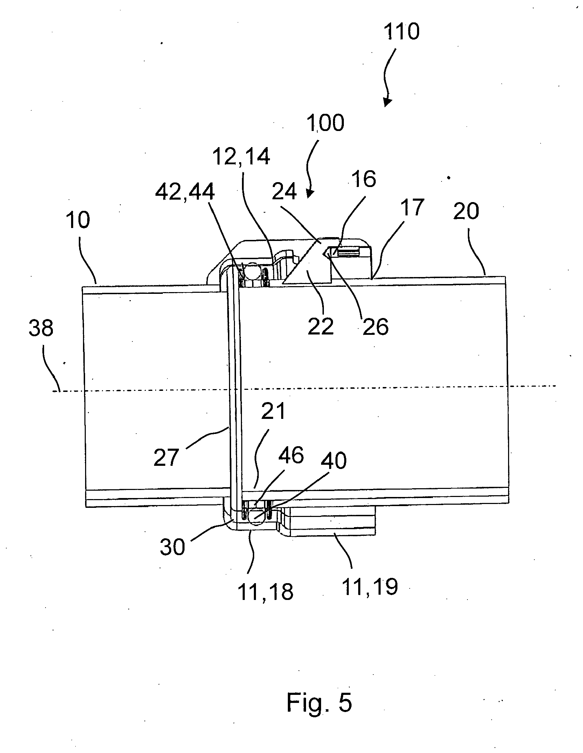

Figure 5 depicts the duct connection 100 in a final position. Now the insertable end part 21 of the second duct 20 is aligned with the axial direction 38 of the receiving end part 11 of the first duct 10. The hook 24 is fully engaged at the edge 16 of the opening 14.

The insertable end part 21 of the second duct 20 has come to an end stop 30 of the receiving end part 11 of the first duct 10, which is provided for limiting an inserting depth for the second duct 20. In particular, the end stop 30 may be configured as a step in the receiving end part 11 or a reduced inner diameter 32.

The sealing means 40 of the insertable end part 21 are compressed at the inner surface 42 of the first segment 18 which is configured with a sealing surface 44 for the sealing means 40 when the insertable end part 21 is inserted into the receiving end part 11. Thus appropriate sealing between the two ducts 10, 20 may be achieved.

### Reference Numbers

- 10: first duct
- 11: receiving end part
- 12: connecting element
- 14: opening
- 16: edge
- 17: first duct opening
- 18: first segment
- 19: second segment
- 20: second duct
- 21: insertable end part
- 22: corresponding connecting element
- 24: hook
- 26: groove
- 27: second duct opening
- 28: mounting direction
- 30: end stop
- 32: inner diameter
- 34: inner diameter
- 36: swivel axis
- 38: axial direction
- 40: sealing means
- 42: inner surface
- 44: sealing surface
- 46: groove
- 48: swivel movement
- 100 .: duct connection
- 110: air duct

## Claims

1. A duct connection (100) between a first duct (10) having a receiving end part (11) with a first duct opening (17) and a second duct (20) having an insertable end part (21) with a second duct opening (27), comprising
a sealing means (40) for sealing between the two ducts (10, 20) in an end position of the receiving and the insertable end parts (11, 21);
a first connecting element (12) arranged at the insertable end part (11);
a second connecting element (22) arranged at the receiving end part (21),
wherein the first connecting element (12) and the second connecting element (12) are configured to cooperate as a swivel joint,
wherein the insertable end part (21) is movable into the receiving end part (11) by means of a swivel movement when the first and second connecting elements (12, 22) are in operating connection as a swivel joint.

2. The duct connection according to claim 1, wherein one of the connecting elements (12, 22) is configured as a hook (24) and the other one of the connecting elements (22, 12) is configured as an opening (14).

3. The duct connection according to claim 2, wherein the opening (14) is a through hole arranged in a wall of one the end parts (11, 21), and the hook (24) is arranged at a wall of the other of the end parts (21, 11).

4. The duct connection according to claim 3, wherein the hook (24) comprises a groove (26), wherein the groove (26) is configured to engage with an edge (16) of the opening (14) when the insertable end part (21) is inserted into the receiving end part (11), wherein the swivel axis (36) is located in the groove (26).

5. The duct connection according to any one of claims 2-4, wherein the hook (24) arranged at one of the end parts (11, 21) is pointing away from the duct opening (17, 27) arranged at the other of the end parts (21,11), in particular wherein the groove (26) is arranged backwards in relation to a mounting direction (28).

6. The duct connection according to any one of the preceding claims, wherein the receiving end part (11) comprises a first segment (18) adjacent to a second segment (19) comprising the duct opening (17), the first segment (18) having an inner diameter (32) being smaller than an inner diameter (34) of the second segment (19).

7. The duct connection according to claim 6, wherein an inner surface (42) of the first segment (18) is configured with a sealing surface (44) for the sealing means (40) when the insertable end part (21) is inserted into the receiving end part (11).

8. The duct connection according to any one of claims 6-7, wherein the opening (14) is located in the second segment (19) of the receiving part (11).

9. The duct connection according to any one of the preceding claims, wherein an end stop (30) is provided for limiting an inserting depth for the second duct (20), in particular wherein the end stop (30) is configured as a step in the receiving end part (11).

10. The duct connection according to any one of the preceding claims, wherein the first duct (10) and the second duct (20) are made of plastics material, in particular of a thermoplastics material.

11. The duct connection according to any one of the preceding claims, wherein the sealing means (40) is a radial sealing means, in particular wherein the sealing means (40) is arranged in a sealing groove (46) at the outer wall of the insertable end part (21) of the second duct (20), in particular wherein said sealing means (40) comprises an annular gasket.

12. An air duct (110) comprising at least a first duct (10) and a second duct (20) with a duct connection (100) according to any one of the preceding claims.
